# EUROPEAN PATENT APPLICATION

(11) **EP 4 482 233 A1**
(43) Date of publication of application: **25.12.2024**
(21) Application number: 22925444.6
(22) Date of filing: 14.02.2022
(51) Int. Cl.: H04W 72/04

(54) **TRIGGER CONDITION DETERMINATION METHOD AND APPARATUS, AND RESOURCE PARTITION CONFIGURATION METHOD AND APPARATUS**

(71) Applicant: Beijing Xiaomi Mobile Software Co., Ltd., Beijing 100085 (CN)
(72) Inventor: LIU, Xiaofei, Beijing 100085 (CN); JIANG, Xiaowei, Beijing 100085 (CN)
(74) Representative: Stöckeler, Ferdinand
(86) International application number: PCT/CN2022/076217
(87) International publication number: WO 2023/151082

(57) **Abstract**

The present disclosure relates to a trigger condition determination method and apparatus, and a resource partition configuration method and apparatus. The trigger condition determination method comprises: determining a feature for triggering random access; selecting a random access channel (RACH) resource, and determining whether the selected RACH resource supports the feature; in response to the selected RACH resource supporting the feature, determining that a trigger condition of the feature is met; and in response to the selected RACH resource not supporting the feature, determining that the trigger condition of the feature is not met. According to the present disclosure, whether a trigger condition of a feature is met can be determined according to whether a selected RACH resource supports the feature, and when specific RACH resources for a feature combination are configured for a terminal on a network side, it is conducive to determining, from the specific RACH resources for the feature combination, a specific RACH resource that supports the feature, and then random access is initiated by means of the specific RACH resource that supports the feature, such that the network side can determine, as early as possible, the feature of the terminal for triggering the random access.

## Description

### TECHNICAL FIELD

The present disclosure relates to the field of communication technologies, specifically to a method for determining a trigger condition, a method for configuring resource partitions, an apparatus for determining a trigger condition, an apparatus for configuring resource partitions, a communication device and a computer-readable storage medium.

### BACKGROUND

For each feature, a network side may configure a specific random access resource, to enable that the network side may recognize the corresponding feature as early as possible according to a specific random access resource used by the terminal for random access.

For example, for a feature of CE (coverage enhancement), the network side may configure a specific random access resource to the feature of the CE, such as a CE specific RACH (random access channel) resource. Subsequently, a terminal may perform the random access by using the CE specific RACH resource when random access is triggered by the feature of the CE, so that the network side may determine the corresponding feature as the CE according to the CE specific RACH resource used by the terminal for the random access, and then perform a reasonable configuration for the terminal based on the feature of the CE.

### SUMMARY

In view of this, embodiments of the present disclosure provide a method for determining a trigger condition, a method for configuring resource partitions, an apparatus for determining a trigger condition, an apparatus for configuring resource partitions, a communication device and a computer-readable storage medium.

According to a first aspect of an embodiment of the present disclosure, there is provided a method for determining a trigger condition, performed by a terminal. The method includes: determining a feature for triggering random access; selecting a random access channel (RACH) resource partition, and determining whether a selected RACH resource supports the feature; determining that a trigger condition of the feature is met in response to the selected RACH resource supporting the feature; and determining that the trigger condition of the feature is not met in response to the selected RACH resource not supporting the feature.

According to a second aspect of an embodiment of the present disclosure, there is provided a method for configuring resource partitions, performed by a network side device. The method includes: configuring random access channel (RACH) resource partitions for a terminal, to enable the terminal to select a RACH resource partition from configured RACH resource partitions, and determine whether a selected RACH resource supports a feature for triggering random access; in which, in response to the selected RACH resource supporting the feature, the terminal determines that the trigger condition of the feature is met; in response to the selected RACH resource not supporting the feature, the terminal determines that the trigger condition of the feature is not met.

According to a third aspect of an embodiment of the present disclosure, there is provided an apparatus for determining a trigger condition, applicable for a terminal. The apparatus includes: a processing module, configured to determine a feature for triggering random access; select a random access channel (RACH) resource partition, and determine whether a selected RACH resource supports the feature; determine that a trigger condition of the feature is met in response to the selected RACH resource supporting the feature; and determine that the trigger condition of the feature is not met in response to the selected RACH resource not supporting the feature.

According to a fourth aspect of an embodiment of the present disclosure, there is provided an apparatus for configuring resource partitions, applicable for network side device. The apparatus includes: a transmitting module, configured to configure random access channel (RACH) resource partitions for a terminal, to enable the terminal to select a RACH resource partition from configured RACH resource partitions, and determine whether a selected RACH resource supports a feature for triggering random access; in which, in response to the selected RACH resource supporting the feature, the terminal determines that the trigger condition of the feature is met; in response to the selected RACH resource not supporting the feature, the terminal determines that the trigger condition of the feature is not met.

According to a fifth aspect of an embodiment of the present disclosure, there is provided a communication device. The communication device includes: a processor; and a memory, configured to store a computer program; in which, when the computer program is executed by the processor, the method for determining the trigger condition as described above is implemented.

According to a sixth aspect of an embodiment of the present disclosure, there is provided a communication device. The communication device includes: a processor; and a memory, configured to store a computer program; in which, when the computer program is executed by the processor, the method for configuring resource partitions as described above is implemented.

According to a seventh aspect of an embodiment of the present disclosure, there is provided a computer-readable storage medium having a computer program stored thereon. When the computer program is executed by the processor, the method for determining the trigger condition as described above is implemented.

According to an eighth aspect of an embodiment of the present disclosure, there is provided a computer-readable storage medium having a computer program stored thereon. When the computer program is executed by the processor, the method for configuring resource partitions as described above is implemented.

According to an embodiment of the present disclosure, after determining the feature for triggering the random access, the terminal selects the random access channel (RACH) resource, and determines whether the selected RACH resource supports the feature, and then determines that the trigger condition of the feature is met in response to the selected RACH resource supporting the feature; and determines that the trigger condition of the feature is not met in response to the selected RACH resource not supporting the feature.

Accordingly, it may be determined whether the trigger condition of the feature is met according to whether the selected RACH resource supports the feature, which is beneficial to determine the specific RACH resource supporting the feature in the feature combination specific RACH resource when the network side device configures the feature combination specific RACH resource for the terminal, and then to initiate the random access through the specific RACH resource supporting the feature, such that the network side device may determine the feature for triggering the random access by the terminal as early as possible.

### BRIEF DESCRIPTION OF THE DRAWINGS

In order to more clearly describe the technical solutions in embodiments of the present disclosure, the following briefly introduces the accompanying drawings required for describing the embodiments. Obviously, the accompanying drawings in the following description are only embodiments of the present disclosure. Other drawings can be obtained based on these drawings, for those skilled in the art, without inventive labor.
FIG. 1 is a flowchart illustrating a method for determining a trigger condition according to an embodiment of the present disclosure.
FIG. 2 is a flowchart illustrating another method for determining a trigger condition according to an embodiment of the present disclosure.
FIG. 3 is a flowchart illustrating yet another method for determining a trigger condition according to an embodiment of the present disclosure.
FIG. 4 is a flowchart illustrating a method for configuring resource partitions according to an embodiment of the present disclosure.
FIG. 5 is a block diagram illustrating an apparatus for determining a trigger condition according to an embodiment of the present disclosure.
FIG. 6 is a block diagram illustrating an apparatus for configuring resource partitions according to an embodiment of the present disclosure.
FIG. 7 is a block diagram illustrating a device configured to determine a trigger condition according to an embodiment of the present disclosure.
FIG. 8 is a block diagram illustrating a device configured to configure resource partitions according to an embodiment of the present disclosure.

### DETAILED DESCRIPTION

Reference will be made clearly and completely in the technical solution of the embodiments of the disclosure with the accompanying drawings. Obviously, the embodiments described here are only part of the embodiments of the disclosure and are not all embodiments of the disclosure. Based on the embodiments of the disclosure, other embodiments obtained by those skilled in the art without inventive works are within the scope of the disclosure.

The terms in embodiments of the present disclosure are only for the purpose of describing specific embodiments, and are not intended to limit embodiments of the present disclosure. The singular forms of "a" and "the" in embodiments of the present disclosure and appended claims are also intended to include plural forms, unless the context clearly indicates other meanings. It should also be understood that the term "and/or" as used herein refers to and includes any or all possible combinations of one or more associated listed items.

It should be understood that although the terms first, second and third may be used in embodiments of the present disclosure to describe various information, the information should not be limited to these terms. These terms are only used to distinguish the same type of information from each other. For example, without departing from the scope of the present disclosure, the first information may also be referred to as the second information, and similarly, the second information may also be referred to as the first information. In different contexts, the term "if' used herein is interpreted as "when" or "upon" or "in response to determining".

For the purpose of simplicity and ease of understanding, terms used herein are "greater than" or "less than", "higher than" or "lower than" when representing a size relationship. But for those skilled in the art, it can be understood that the term "greater than" also covers the meaning of "greater than or equal to", and the term "less than" also covers the meaning of "less than or equal to"; the term "higher than" covers the meaning of "higher than or equal to", and the term "lower than" also covers the meaning of "lower than or equal to".

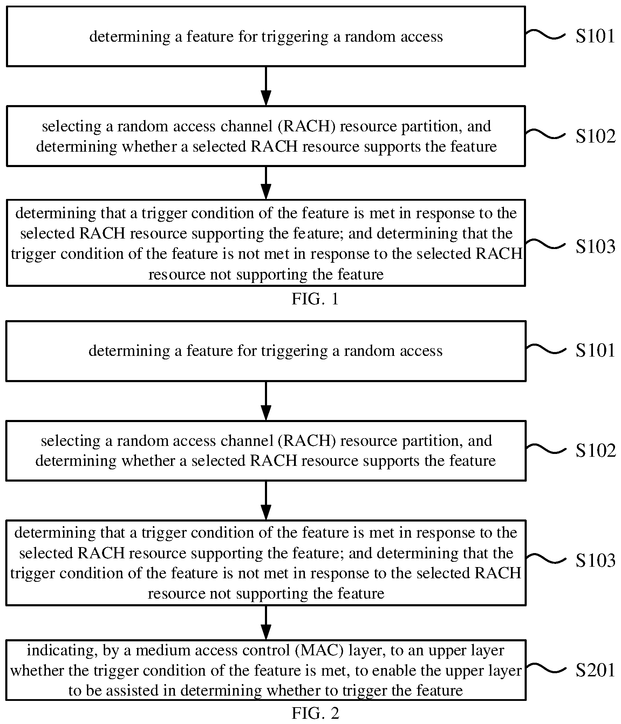

FIG. 1 is a flowchart illustrating a method for determining a trigger condition according to an embodiment of the present disclosure. The method for determining the trigger condition as illustrated in this embodiment may be performed by a terminal. The terminal includes, but is not limited to, a mobile phone, a tablet, a wearable device, a sensor, an Internet-of-Things device, and other communication devices. The terminal may communicate with a network side device. The network side device includes, but is not limited to, a network side device (may be referred to as the network side) in a 4G (4th generation) communication system, a 5G (5th generation) communication system, and a 6G (6th generation) communication system, etc., such as a base station, or a core network, etc.

As illustrated in FIG. 1, the method for determining the trigger condition may include the following steps.

At step S101, a feature for triggering random access is determined.

At step S102, a random access channel (RACH) resource partition is selected, and it is determined whether a selected RACH resource supports the feature.

At step S103, it is determined that a trigger condition of the feature is met in response to the selected RACH resource supporting the feature; and it is determined that the trigger condition of the feature is not met in response to the selected RACH resource not supporting the feature.

It should be noted that the resource in all embodiments of the present disclosure may be a whole block of resource (for example, one frequency band, one channel), or a resource partition (for example, a part of frequency domain resources in one frequency band, or a part of frequency domain resources in one channel).

In an embodiment, the specific random access resource configured by the network side for the terminal may configure respective corresponding specific random access resource for each feature.

For example, a CE specific RACH resource is configured for a CE feature; a Redcap specific RACH resource is configured for a Redcap (reduced capability) feature. Then, when the feature for triggering the random access is CE, the terminal may directly select the CE specific RACH resource to initiate the random access. When the feature for triggering the random access is Redcap, the terminal may directly select the Redcap specific RACH resource to initiate the random access.

In an embodiment, the specific random access resource configured by the network side for the terminal may also be a specific random access resource configured for a feature combination.

For example, the specific RACH resource configured by the network side for the terminal includes two feature combination specific RACH resources, namely, a SDT (small data transmission) + Redcap specific RACH resource, and a CE + Redcap specific RACH resource. At the same time, the network side may also configure non-specific RACH resource, such as a traditional legacy RACH resource.

The feature for triggering the random access by the terminal may be a single feature or a feature combination. The feature for triggering the random access includes any one feature that requires the RACH resource.

When triggering the random access, the terminal may select the legacy RACH resource to initiate the random access in response to the triggered random access being non-feature random access, and may determine the feature for triggering the random access, for example, called as feature A, in response to the triggered random access being feature random access.

Further, when the network side does not configure the feature specific RACH resource for the terminal, the terminal can select the legacy RACH resource to initiate the random access. When the network side device configures the feature specific RACH resources (a specific RACH resource to any one feature, which is not limited to a specific RACH resource to feature A) for the terminal, the terminal may first consider the feature specific RACH resource, and when there is no selectable feature specific RACH resource, then the terminal may select the legacy RACH resource to initiate the random access.

The terminal selecting the specific RACH resource for the feature includes, but is not limited to, a following process.

The terminal determines whether a specific RACH resource whose corresponding feature is included in feature A (that is, as a subset of the feature A) is present in the feature specific RACH resource configured by the network side for the terminal. If present, the feature specific RACH resource can be selected to initiate the random access, otherwise, the legacy RACH resources may be selected to initiate the random access.

For example, the feature for triggering the random access by the terminal is the SDT. Since the feature specific RACH resources configured by the network side for the terminal includes the SDT + Redcap specific RACH resource and the CE + Redcap specific RACH resource, SDT + Redcap is not included in the SDT, and CE + Redcap is not included in the SDT (that is, SDT + Redcap or CE + Redcap is not a subset of the SDT), the terminal may select the legacy RACH resources to initiate the random access.

In an embodiment, the RACH resource includes a feature combination specific RACH resource, where a feature combination includes at least two features.

In an embodiment, the selected RACH resource supporting the feature includes:
a feature combination corresponding to the RACH resource including the feature for triggering the random access.

Under the above situation, for the SDT + Redcap specific RACH resource, SDT + Redcap includes the SDT, then the SDT + Redcap specific RACH resource can actually support the feature of SDT. After the terminal initiates the random access through the SDT + Redcap specific RACH resource, the network side may properly configure the terminal according to the random access resource used by the terminal (that is, the SDT + Redcap specific RACH resource). However, when the terminal does not initiate the random access through the SDT + Redcap specific RACH resource, but initiates the random access through the legacy RACH resource, it may cause the network side to fail to determine the feature for triggering the random access by the terminal as soon as possible.

It should be noted that the feature for triggering the random access by the terminal is a feature combination of SDT + CE + Redcap. Since SDT + Redcap is included in SDT + CE + Redcap, CE + Redcap is also included in SDT + CE + Redcap (that is, SDT + Redcap or CE + Redcap is respectively as a subset of SDT + CE + Redcap), the terminal may select the SDT + Redcap specific RACH resource, or the CE + Redcap specific RACH resource. Specifically, whether to select the SDT + Redcap specific RACH resource or the CE + Redcap specific RACH resource can be determined according to a priority of the feature. For example, a selection basis may include that a selection result firstly meets a high-priority feature. For example, a feature priority is Redcap>CE>SDT, and the CE + Redcap specific RACH resource may be selected.

According to an embodiment of the present disclosure, after determining the feature for triggering the random access, the terminal selects the random access channel (RACH) resource, and determines whether the selected RACH resource supports the feature, and then determines that the trigger condition of the feature is met in response to the selected RACH resource supporting the feature; and determines that the trigger condition of the feature is not met in response to the selected RACH resource not supporting the feature.

Accordingly, it may be determined whether the trigger condition of the feature is met according to whether the selected RACH resource supports the feature, which is beneficial to determine the specific RACH resource supporting the feature in the feature combination specific RACH resource when the network side device configures the feature combination specific RACH resource for the terminal, and then to initiate the random access through the specific RACH resource supporting the feature, such that the network side device may determine the feature for triggering the random access by the terminal as early as possible.

It should be noted that, after determining the specific RACH resource supporting the feature, subsequent operations to be performed include, but are not limited to, initiating the random access through the specific RACH resource supporting the feature, and other operations can also be performed, which may explain in the subsequent embodiments.

In an embodiment, the feature includes at least one of:
a reduced capability (Redcap);
coverage enhancement (CE);
radio access network (RAN) slicing; or
small data transmission (SDT).

FIG. 2 is a flowchart illustrating another method for determining a trigger condition according to an embodiment of the present disclosure. As illustrated in FIG. 2, the method may further include the following step.

At step 201, a medium access control (MAC) layer indicates an upper layer whether the trigger condition of the feature is met, to enable the upper layer to be assisted in determining whether to trigger the feature. The feature includes at least: small data transmission (SDT).

In an embodiment, for a first feature, for example, triggering of the first feature is decided by the MAC layer. After determining that the selected RACH resource supports the first feature and the trigger condition of the first feature is met, the terminal may directly initiate the random access through the selected RACH resource. The RACH resource. The first feature includes, but is not limited to, Redcap, CE, and RAN slicing.

For a second feature, for example, the triggering of the second feature is decided by the upper layer (such as a radio resource control (RRC) layer). After the terminal determines that the selected RACH resource supports the second feature and the trigger condition of the second feature is met, an operation to be performed by may be instructing the upper layer through the MAC layer to indicate whether the trigger condition of the second feature is met, to enable the upper layer to be assisted in determining whether to trigger the feature. The second characteristic includes, but is not limited to, the SDT.

For example, when the upper layer determines that the trigger condition of the SDT is met according to an indicator of the MAC layer, other factors may also be considered to determine whether to initiate the random access through the selected RACH resource.

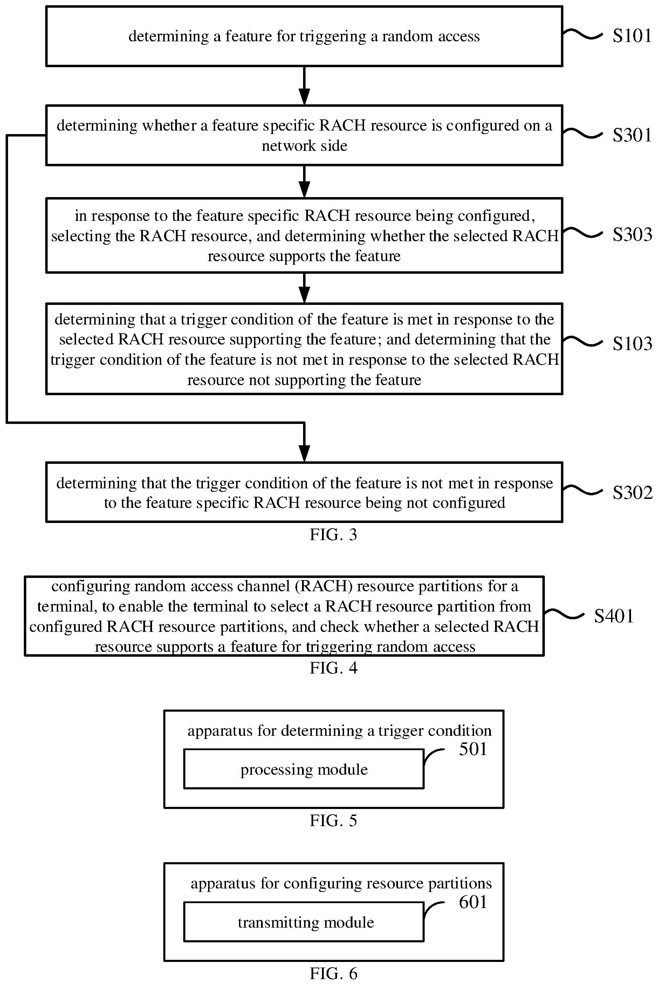

FIG. 3 is a flowchart illustrating yet another method for determining a trigger condition according to an embodiment of the present disclosure. As illustrated in FIG. 3, the method may further include the following steps.

At step S301, it is determined whether a feature specific RACH resource is configured on a network side.

At step S302, it is determined that the trigger condition of the feature is not met in response to the feature specific RACH resource being not configured.

Selecting the RACH resource partition, and determining whether the selected RACH resource supports the feature includes:

At step S303, in response to the feature specific RACH resource being configured, selecting the RACH resource, and determining whether the selected RACH resource supports the feature.

In an embodiment, before selecting a random access channel (RACH) resource, the terminal may first determine whether the network side configures the feature specific RACH resource. The feature specific RACH resource refers to a feature corresponding to the specific RACH resource including a feature for triggering random access.

For example, the feature for triggering the random access is SDT. In response to the specific RACH resource configured by the network side for the terminal only including a SDT + Redcap specific RACH resource, since SDT + Redcap includes the SDT, it may be determined that the network side configures the specific RACH resource of the feature for triggering the random access.

For example, the feature for triggering the random access is SDT. In response to the specific RACH resource configured by the network side for the terminal only including a CE + Redcap specific RACH resource, since CE + Redcap does not include the SDT, it may be determined that the network side does not configure the specific RACH resource of the feature for triggering the random access.

When determining that the feature specific RACH resource is not configured on the network side, it may be determined that the trigger condition of the feature is not met, then no matter how the terminal selects the RACH resource, the RACH resource supporting the feature cannot be selected. It is not necessary to select the random access channel (RACH) resource, and determine whether the selected RACH resource supports the feature, which may avoid unnecessary operations.

When it is determined that the network side device is configured with the feature specific RACH resource, it may be determined that the trigger condition of the feature is met, select the random access channel (RACH) resource, and determine whether the selected RACH resource supports the feature.

In an embodiment, the method further includes:
determining that a type of finally initiated random access is feature random access (feature RACH) in response to the selected RACH resource supporting the feature;
determining that the type of the finally initiated random access is non-feature random access (non-feature RACH) in response to the selected RACH resource not supporting the feature.

In the above embodiment, determining whether the trigger condition of the feature is met according to whether the selected RACH resource supports the feature is just one of optional determined results according to whether the selected RACH resource supports the feature. According to whether the selected RACH resource supports the feature, it may also be determined whether the type of the finally initiated random access is the feature random access.

When determining that the selected RACH resource supports the feature for triggering the random access, it may be determined that the type of the finally initiated random access is the feature random access. When determining that the selected RACH resource does not support the feature for triggering the random access, it may be determined that the type of the finally initiated random access is the non-feature random access.

For example, the feature for triggering the random access is SDT. When determining that the selected RACH resource supports an SDT feature, it may be determined that the type of the finally initiated random access is SDT RACH, and when determining that the selected RACH resource does not support the SDT feature, it may be determined that the type of the finally initiated random access is Non-SDT RACH.

For example, the feature for triggering the random access is Redcap. When determining that the selected RACH resource supports a Redcap feature, it may be determined that the type of the finally initiated random access is msgl-based Redcap RACH, and when determining that the selected RACH resource does not support the Redcap feature, it may be determined that the type of the finally initiated random access is Non-msgl-based Redcap RACH.

In an embodiment, the method further includes:
determining whether a feature specific RACH resource is configured on a network side;
determining that a type of finally initiated random access is feature random access in response to the feature specific RACH resource being configured;
determining that the type of the finally initiated random access is non-feature random access in response to the feature specific RACH resource being not configured.

In the above embodiment, determining whether the trigger condition of the feature is met according to whether the feature specific RACH resource is configured is just one of optional determined results according to whether the feature specific RACH resource is configured. According to whether the feature specific RACH resource is configured, it may also be determined whether the type of the finally initiated random access is the feature random access.

When determining that the feature specific RACH resource is configured, it may be determined that the type of the finally initiated random access is the feature random access. When determining that the feature specific RACH resource is not configured, it may be determined that the type of the finally initiated random access is the non-feature random access.

For example, the feature for triggering the random access is SDT. When determining that an SDT specific RACH resource is configured, it may be determined that the type of the finally initiated random access is SDT RACH, and when determining that the SDT specific RACH resource is not configured, it may be determined that the type of the finally initiated random access is Non-SDT RACH.

For example, the feature for triggering the random access is Redcap. When determining that a Redcap specific RACH resource is configured, it may be determined that the type of the finally initiated random access is msgl-based Redcap RACH, and when determining that the Redcap specific RACH resource is not configured, it may be determined that the type of the finally initiated random access is Non-msgl-based Redcap RACH.

In an embodiment, after determining that the type of the finally initiated random access is the feature random access, no operation may be performed, or an operation may be performed. For example, an operation to be performed includes, but is not limited to, determining the trigger condition of the feature is met.

In an embodiment, after determining that the type of the finally initiated random access is the non-feature random access, no operation may be performed, or an operation may be performed. For example, an operation to be performed includes, but is not limited to, the trigger condition of the feature is not met.

FIG. 4 is a flowchart illustrating a method for configuring resource partitions according to an embodiment of the present disclosure. The method for configuring resource partitions as illustrated in this embodiment may be performed by a network side device. The network side device may communicate with a terminal. The network side device includes, but is not limited to, a 4G (4th generation) base station, a 5G (5th generation) base station, and a 6G (6th generation) base station, and other base stations in a communication system. The terminal includes, but is not limited to, a mobile phone, a tablet, a wearable device, a sensor, an Internet-of-Things device, and other communication devices.

As illustrated in FIG. 4, the method for configuring resource partitions may include the following step.

At step 401, random access channel (RACH) resource partitions are configured for a terminal, to enable the terminal to select a RACH resource partition from configured RACH resource partitions, and determine whether a selected RACH resource supports a feature for triggering random access;
in which, in response to the selected RACH resource supporting the feature, the terminal determines that the trigger condition of the feature is met; in response to the selected RACH resource not supporting the feature, the terminal determines that the trigger condition of the feature is not met.

It should be noted that the resource in all embodiments of the present disclosure may be a whole block of resource (for example, one frequency band, one channel), or a resource partition (for example, a part of frequency domain resources in one frequency band, or a part of frequency domain resources in one channel).

In an embodiment, the specific random access resource configured by the network side for the terminal may configure respective corresponding specific random access resource for each feature.

For example, a CE specific RACH resource is configured for a CE feature; a Redcap specific RACH resource is configured for a Redcap (reduced capability) feature. Then, when the feature for triggering the random access is CE, the terminal may directly select the CE specific RACH resource to initiate the random access. When the feature for triggering the random access is Redcap, the terminal may directly select the Redcap specific RACH resource to initiate the random access.

In an embodiment, the specific random access resource configured by the network side for the terminal may also be a specific random access resource configured for a feature combination.

For example, the specific RACH resource configured by the network side for the terminal includes two feature combination specific RACH resources, namely, a SDT (small data transmission) + Redcap specific RACH resource, and a CE + Redcap specific RACH resource. At the same time, the network side may also configure non-specific RACH resource, such as a traditional legacy RACH resource.

The feature for triggering the random access by the terminal may be a single feature or a feature combination. The feature for triggering the random access includes any one feature that requires the RACH resource.

When triggering the random access, the terminal may select the legacy RACH resource to initiate the random access in response to the triggered random access being non-feature random access, and may determine the feature for triggering the random access, for example, called as feature A, in response to the triggered random access being feature random access.

Further, when the network side does not configure the feature specific RACH resource for the terminal, the terminal can select the legacy RACH resource to initiate the random access. When the network side device configures the feature specific RACH resources (a specific RACH resource to any one feature, which is not limited to a specific RACH resource to feature A) for the terminal, the terminal may first consider the feature specific RACH resource, and when there is no selectable feature specific RACH resource, then the terminal may select the legacy RACH resource to initiate the random access.

The terminal selecting the specific RACH resource for the feature includes, but is not limited to, a following process.

The terminal determines whether a specific RACH resource whose corresponding feature is included in feature A (that is, as a subset of the feature A) is present in the feature specific RACH resource configured by the network side for the terminal. If present, the feature specific RACH resource can be selected to initiate the random access, otherwise, the legacy RACH resources may be selected to initiate the random access.

For example, the feature for triggering the random access by the terminal is the SDT. Since the feature specific RACH resources configured by the network side for the terminal includes the SDT + Redcap specific RACH resource and the CE + Redcap specific RACH resource, SDT + Redcap is not included in the SDT (that is, SDT + Redcap or CE + Redcap is not a subset of the SDT), and CE + Redcap is not included in the SDT, the terminal may select the legacy RACH resources to initiate the random access.

In an embodiment, the RACH resource includes a feature combination specific RACH resource, where a feature combination includes at least two features.

In an embodiment, the selected RACH resource supporting the feature includes:
a feature combination corresponding to the RACH resource including the feature for triggering the random access.

Under the above situation, for the SDT + Redcap specific RACH resource, SDT + Redcap includes the SDT, then the SDT + Redcap specific RACH resource can actually support the feature of SDT. After the terminal initiates the random access through the SDT + Redcap specific RACH resource, the network side may properly configure the terminal according to the random access resource used by the terminal (that is, the SDT + Redcap specific RACH resource). However, when the terminal does not initiate the random access through the SDT + Redcap specific RACH resource, but initiates the random access through the legacy RACH resource, it may cause the network side to fail to determine the feature for triggering the random access by the terminal as soon as possible.

It should be noted that the feature for triggering the random access by the terminal is a feature combination of SDT + CE + Redcap. Since SDT + Redcap is included in SDT + CE + Redcap, CE + Redcap is also included in SDT + CE + Redcap (that is, SDT + Redcap or CE + Redcap is respectively as a subset of SDT + CE + Redcap), the terminal may select the SDT + Redcap specific RACH resource, or the CE + Redcap specific RACH resource. Specifically, whether to select the SDT + Redcap specific RACH resource or the CE + Redcap specific RACH resource can be determined according to a priority of the feature. For example, a selection basis may include that a selection result firstly meets a high-priority feature. For example, a feature priority is Redcap>CE>SDT, and the CE + Redcap specific RACH resource may be selected.

According to an embodiment of the present disclosure, the network side device (also referred to as a network side) configures the random access channel (RACH) resource partitions for the terminal. After determining the feature for triggering the random access, the terminal selects the random access channel (RACH) resource, and determines whether the selected RACH resource supports the feature, and then determines that the trigger condition of the feature is met in response to the selected RACH resource supporting the feature; and determines that the trigger condition of the feature is not met in response to the selected RACH resource not supporting the feature.

Accordingly, it may be determined whether the trigger condition of the feature is met according to whether the selected RACH resource supports the feature, which is beneficial to determine the specific RACH resource supporting the feature in the feature combination specific RACH resource when the network side device configures the feature combination specific RACH resource for the terminal, and then to initiate the random access through the specific RACH resource supporting the feature, such that the network side device may determine the feature for triggering the random access by the terminal as early as possible.

In an embodiment, the RACH resource partitions configured for the terminal are further configured to cause the terminal to determine whether the network side is configured with a feature specific RACH resource;
in which, in response to the feature specific RACH resource being not configured, the terminal determines that the trigger condition of the feature is not met; in response to the feature specific RACH resource being configured, the terminal selects the RACH resource, and determines whether the selected RACH resource supports the feature.

In an embodiment, before selecting a random access channel (RACH) resource, the terminal may first determine whether the network side configures the feature specific RACH resource. The feature specific RACH resource refers to a feature corresponding to the specific RACH resource including a feature for triggering random access.

For example, the feature for triggering the random access is SDT. In response to the specific RACH resource configured by the network side for the terminal only including a SDT + Redcap specific RACH resource, since SDT + Redcap includes the SDT, it may be determined that the network side configures the specific RACH resource of the feature for triggering the random access.

For example, the feature for triggering the random access is SDT. In response to the specific RACH resource configured by the network side for the terminal only including a CE + Redcap specific RACH resource, since CE + Redcap does not include the SDT, it may be determined that the network side does not configure the specific RACH resource of the feature for triggering the random access.

When determining that the feature specific RACH resource is not configured on the network side, it may be determined that the trigger condition of the feature is not met, then no matter how the terminal selects the RACH resource, the RACH resource supporting the feature cannot be selected. It is not necessary to select the random access channel (RACH) resource, and determine whether the selected RACH resource supports the feature, which may avoid unnecessary operations.

When it is determined that the network side device is configured with the feature specific RACH resource, it may be determined that the trigger condition of the feature is met, select the random access channel (RACH) resource, and determine whether the selected RACH resource supports the feature.

In an embodiment, the RACH resource partitions configured for the terminal are further configured to cause the terminal to determine a type of finally initiated random access;
in which, in response to the selected RACH resource supporting the feature, the terminal determines that the type of the finally initiated random access is feature random access; in response to the selected RACH resource not supporting the feature, the terminal determines that the type of the finally initiated random access is non-feature random access.

In the above embodiment, determining whether the trigger condition of the feature is met according to whether the selected RACH resource supports the feature is just one of optional determined results according to whether the selected RACH resource supports the feature. According to whether the selected RACH resource supports the feature, it may also be determined whether the type of the finally initiated random access is the feature random access.

When determining that the selected RACH resource supports the feature for triggering the random access, it may be determined that the type of the finally initiated random access is the feature random access. When determining that the selected RACH resource does not support the feature for triggering the random access, it may be determined that the type of the finally initiated random access is the non-feature random access.

For example, the feature for triggering the random access is SDT. When determining that the selected RACH resource supports an SDT feature, it may be determined that the type of the finally initiated random access is SDT RACH, and when determining that the selected RACH resource does not support the SDT feature, it may be determined that the type of the finally initiated random access is Non-SDT RACH.

For example, the feature for triggering the random access is Redcap. When determining that the selected RACH resource supports a Redcap feature, it may be determined that the type of the finally initiated random access is msgl-based Redcap RACH, and when determining that the selected RACH resource does not support the Redcap feature, it may be determined that the type of the finally initiated random access is Non-msgl-based Redcap RACH.

In an embodiment, the RACH resource partitions configured for the terminal are further configured to cause the terminal to determine whether the network side is configured with a feature specific RACH resource;
in which, in response to the feature specific RACH resource being configured, the terminal determines that the type of the finally initiated random access is feature random access; in response to the feature specific RACH resource being not configured, the terminal determines that the type of the finally initiated random access is non-feature random access.

In the above embodiment, determining whether the trigger condition of the feature is met according to whether the feature specific RACH resource is configured is just one of optional determined results according to whether the feature specific RACH resource is configured. According to whether the feature specific RACH resource is configured, it may also be determined whether the type of the finally initiated random access is the feature random access.

When determining that the feature specific RACH resource is configured, it may be determined that the type of the finally initiated random access is the feature random access. When determining that the feature specific RACH resource is not configured, it may be determined that the type of the finally initiated random access is the non-feature random access.

For example, the feature for triggering the random access is SDT. When determining that an SDT specific RACH resource is configured, it may be determined that the type of the finally initiated random access is SDT RACH, and when determining that the SDT specific RACH resource is not configured, it may be determined that the type of the finally initiated random access is Non-SDT RACH.

For example, the feature for triggering the random access is Redcap. When determining that a Redcap specific RACH resource is configured, it may be determined that the type of the finally initiated random access is msgl-based Redcap RACH, and when determining that the Redcap specific RACH resource is not configured, it may be determined that the type of the finally initiated random access is Non-msgl-based Redcap RACH.

Corresponding to the aforementioned embodiments of the method for determining the trigger condition and the method for configuring resource partitions, the present disclosure also provides embodiments of an apparatus for determining a trigger condition and an apparatus for configuring resource partitions.

FIG. 5 is a block diagram illustrating an apparatus for determining a trigger condition according to an embodiment of the present disclosure. The apparatus for determining the trigger condition as illustrated in this embodiment may be applicable for a terminal. The terminal includes, but is not limited to, a mobile phone, a tablet, a wearable device, a sensor, an Internet-of-Things device, and other communication devices. The terminal may communicate with a network side device. The network side device includes, but is not limited to, a network side device (may be referred to as the network side) in a 4G (4th generation) communication system, a 5G (5th generation) communication system, and a 6G (6th generation) communication system, etc., such as a base station, or a core network, etc.

As illustrated in FIG. 5, the apparatus for determining the trigger condition may include:
a processing module 501, configured to determine a feature for triggering random access; select a random access channel (RACH) resource partition, and determine whether a selected RACH resource supports the feature;
determine that a trigger condition of the feature is met in response to the selected RACH resource supporting the feature; and determine that the trigger condition of the feature is not met in response to the selected RACH resource not supporting the feature.

In an embodiment, the processing module is configured to, determine whether a feature specific RACH resource is configured on a network side;
determine that the trigger condition of the feature is not met in response to the feature specific RACH resource being not configured; in response to the feature specific RACH resource being configured, select the RACH resource, and determine whether the selected RACH resource supports the feature.

In an embodiment, the processing module is configured to, determine that a type of finally initiated random access is feature random access in response to the selected RACH resource supporting the feature; determine that the type of the finally initiated random access is non-feature random access in response to the selected RACH resource not supporting the feature.

In an embodiment, the processing module is configured to, determine whether a feature specific RACH resource is configured on a network side;
determine that a type of finally initiated random access is feature random access in response to the feature specific RACH resource being configured; determine that the type of the finally initiated random access is non-feature random access in response to the feature specific RACH resource being not configured.

In an embodiment, the RACH resource includes a feature combination specific RACH resource, and a feature combination includes at least two features.

In an embodiment, the selected RACH resources supporting the feature includes:
a feature combination corresponding to the RACH resource including the feature for triggering the random access.

In an embodiment, the feature includes at least one of:
a reduced capability (Redcap);
coverage enhancement (CE);
radio access network (RAN) slicing; or
small data transmission (SDT).

In an embodiment, the processing module is configured to, indicate, by a medium access control (MAC) layer, to an upper layer whether the trigger condition of the feature is met, to enable the upper layer to be assisted in determining whether to trigger the feature.

In an embodiment, the feature includes at least: small data transmission (SDT).

FIG. 6 is a block diagram illustrating an apparatus for configuring resource partitions according to an embodiment of the present disclosure. The apparatus for configuring resource partitions as illustrated in this embodiment may be applicable for a network side device. The network side device may communicate with a terminal. The network side device includes, but is not limited to, a 4G (4th generation) base station, a 5G (5th generation) base station, and a 6G (6th generation) base station, and other base stations in a communication system. The terminal includes, but is not limited to, a mobile phone, a tablet, a wearable device, a sensor, an Internet-of-Things device, and other communication devices.

As illustrated in FIG. 6, the apparatus for configuring resource partitions may include:
a transmitting module 601, configured to configure random access channel (RACH) resource partitions for a terminal, to enable the terminal to select a RACH resource partition from configured RACH resource partitions, and determine whether a selected RACH resource supports a feature for triggering random access;
in which, in response to the selected RACH resource supporting the feature, the terminal determines that the trigger condition of the feature is met; in response to the selected RACH resource not supporting the feature, the terminal determines that the trigger condition of the feature is not met.

In an embodiment, the RACH resource partitions configured for the terminal are further configured to cause the terminal to determine whether the network side is configured with a feature specific RACH resource;
**in** which, in response to the feature specific RACH resource being not configured, the terminal determines that the trigger condition of the feature is not met; in response to the feature specific RACH resource being configured, the terminal selects the RACH resource, and determines whether the selected RACH resource supports the feature.

In an embodiment, the RACH resource partitions configured for the terminal are further configured to cause the terminal to determine a type of finally initiated random access;
in which, in response to the selected RACH resource supporting the feature, the terminal determines that the type of the finally initiated random access is feature random access; in response to the selected RACH resource not supporting the feature, the terminal determines that the type of the finally initiated random access is non-feature random access.

In an embodiment, the RACH resource partitions configured for the terminal are further configured to cause the terminal to determine whether the network side is configured with a feature specific RACH resource;
in which, in response to the feature specific RACH resource being configured, the terminal determines that the type of the finally initiated random access is feature random access; in response to the feature specific RACH resource being not configured, the terminal determines that the type of the finally initiated random access is non-feature random access.

In an embodiment, the RACH resource includes a feature combination specific RACH resource, and a feature combination includes at least two features.

In an embodiment, the feature includes at least one of:
a reduced capability (Redcap);
coverage enhancement (CE);
radio access network (RAN) slicing; or
small data transmission (SDT).

With respect to the apparatus in the above embodiments, the specific way in which each module performs its operation has been described in detail in the embodiments of the relevant method, and will not be described in detail here.

The apparatus embodiments basically correspond to the method embodiments, and the related contents can refer to part of the descriptions of the method embodiments. The above-described apparatus embodiments are merely schematic, the modules described above as separate components may or may not be physically separated, and the components displayed as modules may or may not be physical modules, i.e., the components may be located in one area or may be distributed to multiple network modules. Some or all of these modules can be selected according to practical needs to achieve the purpose of the solution of the disclosure. Those skilled in the art can understand and implement the solution without inventive works.

An embodiment of the disclosure also provides a communication device. The communication device includes: a processor; and a memory, configured to store a computer program; in which, when the computer program is executed by the processor, the method for determining the trigger condition as described in any one of the above embodiments is implemented.

An embodiment of the disclosure also provides a communication device. The communication device includes: a processor; and a memory, configured to store a computer program; in which, when the computer program is executed by the processor, the method for configuring resource partitions as described in any one of the above embodiments is implemented.

**An** embodiment of the disclosure provides a computer-readable storage medium having computer programs stored thereon. When the computer program is executed by the processor, the method for determining the trigger condition as described in any one of the above embodiments is implemented.

**An** embodiment of the disclosure provides a computer-readable storage medium having computer programs stored thereon. When the computer program is executed by the processor, the method for configuring resource partitions as described in any one of the above embodiments is implemented.

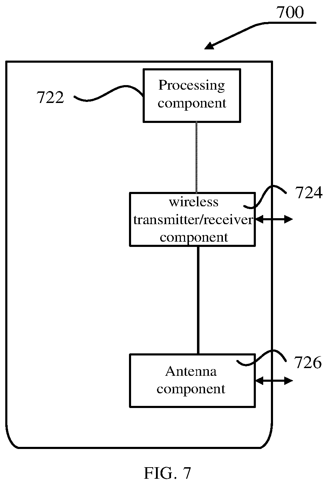

As shown in FIG. 7, FIG. 7 is a block diagram of a device 700 configured to determine a trigger condition according to an embodiment of the present disclosure. The device 700 may be provided as a base station. As shown in FIG. 7, the device 700 includes a processing component 722, a wireless transmitter/receiver component 724, an antenna component 726, and a signal processing portion specific to a wireless interface. The processing component 722 may include one or more processors. One of the processors of the processing component 722 may be configured to implement the method for capability sending according to any one of the above embodiments, and/or the method for configuring resource partitions according to any one of the above embodiments.

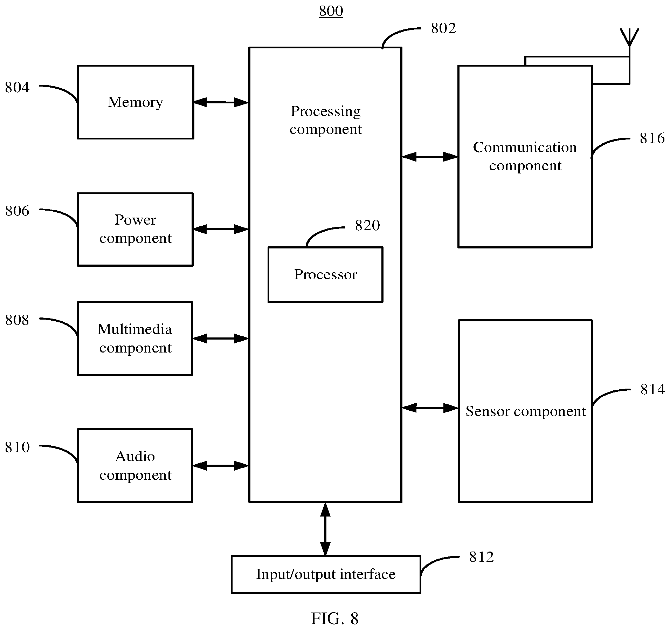

FIG. 8 is a block diagram of a device 800 configured to configure resource partitions according to an embodiment of the disclosure. For example, the device 800 may be a cell phone, a computer, a digital broadcast terminal, a message transceiver device, a game console, a tablet device, a medical device, a fitness device and a personal digital assistant.

As shown in FIG. 8, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to perform all or part of the steps in the above described method. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a Static Random Access Memory (SRAM), an Electrically Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front-facing camera and/or a rear-facing camera. When the device 800 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 810 is configured to output and/or input audio signals. For example, the audio component 810 includes a microphone (MIC) configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a Complementary Metal Oxide Semiconductor (CMOS) or Charge-Coupled Device (CCD) image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, 3G, 4G LTE, 5G NR or a combination thereof. In an exemplary embodiment, the communication component 816 receives a broadcast signal or broadcast associated information from an external broadcast management system via a broadcast channel. In an exemplary embodiment, the communication component 816 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In an example embodiment, the device 800 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described method.

In the exemplary embodiments, there is also provided a non-transitory computer-readable storage medium including executable instructions, such as the memory 804, executable by the processor 820 in the device 800, for performing the above method. For example, the non-transitory computer-readable storage medium may be a ROM, a Random Access Memory (RAM), a CD-ROM, a magnetic tape, a floppy disc, and an optical data storage device.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for determining a trigger condition, performed by a terminal, comprising:
determining a feature for triggering a random access;
selecting a random access channel (RACH) resource partition, and determining whether a selected RACH resource supports the feature;
determining that a trigger condition of the feature is met in response to the selected RACH resource supporting the feature; and
determining that the trigger condition of the feature is not met in response to the selected RACH resource not supporting the feature.

2. The method according to claim 1, further comprising:
determining whether a feature specific RACH resource is configured on a network side; and
determining that the trigger condition of the feature is not met in response to the feature specific RACH resource being not configured;
wherein selecting the random access channel (RACH) resource partition, and determining whether the selected RACH resource supports the feature comprises:
in response to the feature specific RACH resource being configured, selecting the RACH resource, and determining whether the selected RACH resource supports the feature.

3. The method according to claim 1, further comprising:
determining that a type of finally initiated random access is feature random access in response to the selected RACH resource supporting the feature; and
determining that the type of the finally initiated random access is non-feature random access in response to the selected RACH resource not supporting the feature.

4. The method according to claim 1, further comprising:
determining whether a feature specific RACH resource is configured on a network side;
determining that a type of finally initiated random access is feature random access in response to the feature specific RACH resource being configured; and
determining that the type of the finally initiated random access is non-feature random access in response to the feature specific RACH resource being not configured.

5. The method according to claim 1, wherein the RACH resource comprises a feature combination specific RACH resource, and a feature combination comprises at least two features.

6. The method according to claim 5, wherein the selected RACH resources supporting the feature comprises:
a feature combination corresponding to the RACH resource comprising the feature for triggering the random access.

7. The method according to claim 1, wherein the feature comprises at least one of:
a reduced capability (Redcap);
coverage enhancement (CE);
radio access network (RAN) slicing; or
small data transmission (SDT).

8. The method according to any one of claims 1 to 7, further comprising:
indicating, by a medium access control (MAC) layer, to an upper layer whether the trigger condition of the feature is met, to enable the upper layer to be assisted in determining whether to trigger the feature.

9. The method according to claim 8, wherein the feature comprises at least:
small data transmission (SDT).

10. A method for configuring resource partitions, performed by a network side device, comprising:
configuring random access channel (RACH) resource partitions for a terminal, to enable the terminal to select a RACH resource partition from configured RACH resource partitions, and determine whether a selected RACH resource supports a feature for triggering random access;
wherein, in response to the selected RACH resource supporting the feature, the terminal determines that the trigger condition of the feature is met; and in response to the selected RACH resource not supporting the feature, the terminal determines that the trigger condition of the feature is not met.

11. The method according to claim 10, wherein the RACH resource partitions configured for the terminal are further configured to cause the terminal to determine whether the network side is configured with a feature specific RACH resource;
wherein, in response to the feature specific RACH resource being not configured, the terminal determines that the trigger condition of the feature is not met; and in response to the feature specific RACH resource being configured, the terminal selects the RACH resource, and determines whether the selected RACH resource supports the feature.

12. The method according to claim 10, wherein the RACH resource partitions configured for the terminal are further configured to cause the terminal to determine a type of finally initiated random access;
wherein, in response to the selected RACH resource supporting the feature, the terminal determines that the type of the finally initiated random access is feature random access; and in response to the selected RACH resource not supporting the feature, the terminal determines that the type of the finally initiated random access is non-feature random access.

13. The method according to claim 10, wherein the RACH resource partitions configured for the terminal are further configured to cause the terminal to determine whether the network side is configured with a feature specific RACH resource;
wherein, in response to the feature specific RACH resource being configured, the terminal determines that the type of the finally initiated random access is feature random access; and in response to the feature specific RACH resource being not configured, the terminal determines that the type of the finally initiated random access is non-feature random access.

14. The method according to claim 10, wherein the RACH resource comprises a feature combination specific RACH resource, and a feature combination comprises at least two features.

15. The method according to claim 10, wherein the feature comprises at least one of:
a reduced capability (Redcap);
coverage enhancement (CE);
radio access network (RAN) slicing; or
small data transmission (SDT).

16. An apparatus for determining a trigger condition, applicable for a terminal, comprising:
a processing module, configured to determine a feature for triggering random access; select a random access channel (RACH) resource partition, and determine whether a selected RACH resource supports the feature;
determine that a trigger condition of the feature is met in response to the selected RACH resource supporting the feature; and determine that the trigger condition of the feature is not met in response to the selected RACH resource not supporting the feature.

17. An apparatus for configuring resource partitions, applicable for a network side device, comprising:
a transmitting module, configured to configure random access channel (RACH) resource partitions for a terminal, to enable the terminal to select a RACH resource partition from configured RACH resource partitions, and determine whether a selected RACH resource supports a feature for triggering random access;
wherein, in response to the selected RACH resource supporting the feature, the terminal determines that the trigger condition of the feature is met; in response to the selected RACH resource not supporting the feature, the terminal determines that the trigger condition of the feature is not met.

18. A communication device, comprising:
a processor; and
a memory, configured to store a computer program;
wherein, when the computer program is executed by the processor, the method for determining the trigger condition according to any one of claims 1 to 9 is implemented.

19. A communication device, comprising:
a processor; and
a memory, configured to store a computer program;
wherein, when the computer program is executed by the processor, the method for configuring resource partitions according to any one of claims 10 to 15 is implemented.

20. A computer-readable storage medium having a computer program stored thereon, wherein, when the computer program is executed by a processor, steps of the method for determining the trigger condition according to any one of claims 1 to 9 are implemented.

21. A computer-readable storage medium having a computer program stored thereon, wherein, when the computer program is executed by a processor, steps of the method for configuring resource partitions according to any one of claims 10 to 15 are implemented.
